# EUROPÄISCHE PATENTSCHRIFT

(11) **EP 1 868 926 B1**
(45) Veröffentlichungstag und Bekanntmachung des Hinweises auf die Patenterteilung: **27.01.2010**
(21) Anmeldenummer: 06725549.7
(22) Anmeldetag: 04.04.2006
(51) Int. Cl.: B65G 47/51

(54) **VERFAHREN ZUR ÜBERNAHME EINER ERSTEN ANZAHL VON OBJEKTEN UND ZUR ÜBERGABE EINER ZWEITEN ANZAHL VON OBJEKTEN UND VORRICHTUNG**
METHOD FOR TRANSFERRING A FIRST NUMBER OF OBJECTS AND A SECOND NUMBER OF OBJECTS AND CORRESPONDING DEVICE
PROCEDE POUR PRENDRE EN CHARGE UN PREMIER ENSEMBLE D'OBJETS ET POUR TRANSFERER UN SECOND ENSEMBLE D'OBJETS, ET DISPOSITIF CORRESPONDANT

(30) Priorität: 07.04.2005 DE 102005016168
(43) Veröffentlichungstag der Anmeldung: 26.12.2007
(73) Patentinhaber: GRUENENTHAL GMBH, 52078 Aachen (DE); Harro Höfliger Verpackungsmaschinen GmbH, 71573 Allmersbach im Tal (DE)
(72) Erfinder: SCHATEIKIS, Dieter, 52223 Stolberg (DE); BOHN, Markus, 70567 Stuttgart (DE)
(74) Vertreter: Wolff, Felix
(86) Internationale Anmeldenummer: PCT/EP2006/061313
(87) Internationale Veröffentlichungsnummer: WO 2006/106106

(56) Entgegenhaltungen:
- US-A- 4 500 247
- US-A- 5 415 295
- US-A- 5 829 222

## Beschreibung

Die Erfindung betrifft ein Verfahren zur Übernahme einer ersten Anzahl m₁ von Objekten, insbesondere pharmazeutischen Produkten, von einer Abgabevorrichtung und zur Übergabe einer zweiten Anzahl m₂ von Objekten an eine Annahmevorrichtung.

Solche Verfahren sind an sich bekannt. Beispielsweise ist es bei Herstellungsprozessen allgemein erforderlich, Objekte, beispielsweise durch eine erste Arbeitsstation hergestellte einzelne Produkte, kontinuierlich bzw. gruppenweise aufzunehmen und danach entweder kontinuierlich oder gruppenweise wieder abzugeben, beispielsweise an eine zweite Arbeitsstation. Bei solchen bekannten Verfahren müssen häufig aufwendige Vorrichtungen bzw. Vorkehrungen getroffen werden, damit der Produktionsfluss von Produkten von der ersten Bearbeitungsstation zu der zweiten Bearbeitungsstation reibungslos funktioniert, wobei es insbesondere auf die räumliche Anordnung der verschiedenen Bearbeitungsstationen ankommt und wobei es auch auf die zeitliche Ausgestaltung des Produktionsflusses ankommt. Dies ist besonders dann wichtig, wenn unterschiedliche Bearbeitungsstationen, beispielsweise die Formgebung von Produkten, die Behandlung von Produkten, die Verpackung von Produkten und dergleichen mehr, auf unterschiedlichen Maschinen durchgeführt werden, die unterschiedliche Verarbeitungskapazitäten, unterschiedliche Qualitätsraten bzw. Ausschussquoten und unterschiedliche Wartungsintervalle aufweisen.

Angestrebt wird allgemein, einen möglichst reibungslosen Durchlauf der Produkte durch die gesamte Produktionskette von der Verarbeitung der Vorstufen der Produkte bis zur versandfertigen Verpackung bzw. Kartonierung der Produkte zu realisieren, wobei dies möglichst platzsparend und möglichst kosteneffizient zu geschehen hat, denn beispielsweise eine überdimensionierte und daher nicht genutzte Verarbeitungskapazität an einer Bearbeitungsstation schlägt sich in der Regel in unnötig hohen Investitionskosten nieder, da letztlich die Gesamtproduktionskapazität so groß ist, wie das schwächste Glied in der gesamten Produktionskette.

Bei bekannten Verfahren zur Übernahme einer Anzahl von Produkten und zur Übergabe einer anderen Anzahl von Produkten ist es nachteilig, dass solche Verfahren in der Regel einen großen Platzbedarf haben, insbesondere dann, wenn eine Speicherung bzw. Pufferung von Objekten bzw. von Produkten durchgeführt werden soll und wenn darüber hinaus noch eine Qualitätskontrolle, beispielsweise in Form einer In-Prozess-Kontrolle durchgeführt werden soll.

Die Druckschrift US 5,415,295 A beschreibt eine automatische Sortieranlage für Pellets, wobei die Sortieranlage einen drehbaren Transporttisch mit vier von der Drehachse radial beabstandeten Transportaufnahmen aufweist, wobei jede Transportaufnahme mehrere Greifer aufweist, so dass der Transporttisch gleichzeitig eine Anzahl n von Pellets von einer Abgabevorrichtung übernehmen kann, und eine Anzahl n von Pellets an einen Kontrolletisch übergeben kann.

Der Erfindung liegt daher die Aufgabe zugrunde, die Nachteile der bekannten Verfahren zu vermeiden und eine möglichst kosteneffiziente und über die Betriebszeit stabile Verfahrensweise zur Übernahme bzw. zur Übergabe von Objekten anzugeben.

Diese Aufgabe wird erfindungsgemäß durch ein Verfahren gemäß Anspruch 1 gelöst.

Bevorzugt ist, dass die Objekte entlang der Drehachse um eine Wegstrecke verlagert werden, dass die Objekte um die Drehachse um einen Drehwinkel gedreht werden und dass die erste Anzahl m₁ ungleich der zweiten Anzahl m₂ ist. Hierdurch ist es möglich, die Objekte nicht nur räumlich zu verlagern, sondern auch noch in einer auf die jeweiligen Arbeitsstationen besonders angepasste Weise räumlich zu verlagern, etwa ihre Orientierung zu verändern und ihre Lage zu verändern. Dies ermöglicht es erfindungsgemäß, die Gesamtanordnung einer Produktionseinrichtung, die das erfindungsgemäße Verfahren benutzt, optimal, insbesondere besonders platz- und kostensparend einzurichten.

Es ist ferner bevorzugt, dass die erste Anzahl m₁ von Objekten im wesentlichen gleichzeitig übernommen werden und dass die zweite Anzahl m₂ von Objekten im wesentlichen gleichzeitig übergeben werden. Ferner ist bevorzugt, dass die erste Anzahl m₁ von Objekten während eines Übernahmetaktes übergeben werden und dass die zweite Anzahl m₂ von Objekten während eines Übergabetaktes übergeben werden, wobei sich der Übernahmetakt und der Übergabetakt zumindest zeitlich überlappen. Es ist hierdurch erfindungsgemäß eine taktweise Verarbeitung bzw. ein taktweiser Durchfluss von Objekten durch die Produktionsanlage möglich, wobei die Anzahlen m₁ und m₂ in relativ weiten Grenzen auf die jeweiligen Anforderungen der einzelnen Bearbeitungsstationen optimal angepasst werden können.

Erfindungsgemäß ist ferner bevorzugt, dass die Objekte zeitlich nach der In-Prozess-Kontrolle gepuffert bzw. gespeichert werden. Hierdurch wird eine Speicherung bzw. Pufferung von nicht den Qualitätskriterien entsprechenden Objekten vermieden, da solche Objekte vor der Pufferung bzw. Speicherung ausgesondert werden können. Ferner ist es hierdurch erfindungsgemäß möglich, dass der Produktionsdurchlauf der Objekte verstetigt werden kann, weil eine punktuell höhere Ausschussrate nicht zu einem Abbruch der Produktionskette mit den entsprechenden nachteiligen Folgen führt bzw. solche negativen Folgen erst nach einem (vergleichsweise unwahrscheinlichen) dauerhaften Absinken der Produktionsqualität eintreten.

Bevorzugt ist ferner, dass die In-Prozess-Kontrolle für jeweils eine Gruppe von Objekten, die der ersten Anzahl m₁ von Objekten entspricht, gleichzeitig durchgeführt wird. Hierdurch ist es vorteilhaft möglich, dass die In-Prozess-Kontrolle im gleichen Taktraster wie die Übernahme der ersten Anzahl von Objekten erfolgt, was den gesamten Prozessablauf vereinfacht und damit kostengünstiger gestaltet.

Ferner ist bevorzugt, dass die erste Anzahl m₁ von Objekten fünf- bis fünfzig, insbesondere sechzehn, ist und dass die zweite Anzahl m₂ von Objekten eins- bis fünfzehn, insbesondere fünf, ist, wobei die erste Anzahl m₁ von Objekten bevorzugt größer als die zweite Anzahl m₂ ist. Hierdurch ist es erfindungsgemäß möglich, gängige Kapazitätsverhältnisse von Produktionsanlagen bzw. von einzelnen Arbeitsstationen solcher Produktionsanlagen, insbesondere für pharmazeutische Produkte, unter Anwendung des erfindungsgemäßen Verfahrens zu realisieren.

Ein weiterer Gegenstand der vorliegenden Erfindung ist eine Vorrichtung gemäß Anspruch 8.

Erfindungsgemäß weist die Transporteinrichtung einen die Drehachse bestimmenden Arm sowie eine von der Drehachse radial beabstandete erste Transportaufnahme und eine von der Drehachse radial beabstandete zweite Transportaufnahme auf. Es ist hierdurch möglich, auf sehr kleinem Raum eine Lageänderung bzw. Positionsänderung der Objekte leicht und einfach zu realisieren, wobei darüber hinaus die Positionsgenauigkeit ein besonders hohes Maß erreicht.

Es ist ferner bevorzugt, dass die Transportaufnahme entlang des Arms axial um etwa die Hälfte der Wegstrecke beabstandet ist. Hierdurch ist es möglich, eine halbtaktweise Verlagerung der Objekte derart zu realisieren, dass in einem ersten Halbtakt die Objekte übernommen und zur Kontrolle durch die Kontrolleinrichtung verlagert werden und dass in einem zweiten Halbtakt, der (für andere Objekte) gleichzeitig mit dem ersten Halbtakt erfolgt, Objekte von der In-Prozess-Kontrolle der Puffereinrichtung zugeführt werden.

Es ist weiterhin bevorzugt, dass die Drehachse einer erfindungsgemäßen Vorrichtung im wesentlichen vertikal verläuft bzw. dass bei einem erfindungsgemäßen Verfahren die Drehachse im wesentlichen vertikal verläuft. Die Objekte können dann auf einfache Art und Weise und gegebenenfalls zusätzlich um ihre eigene Achse (senkrechte Achse) gedreht werden und so den nachfolgenden Arbeitsstationen in optimaler Weise zugeführt werden bzw. den vorhergehenden Arbeitsstationen in optimaler Weise entnommen werden.

Bevorzugt ist weiterhin vorgesehen, dass die Puffereinrichtung einen Trichter als Puffer aufweist. Hierdurch kann mit außerordentlich wenig Aufwand eine zuverlässige und robuste. Pufferung der Objekte erzielt werden.

Die Erfindung wird nachfolgend anhand von in der Zeichnung dargestellten Ausführungsbeispielen näher erläutert. Es zeigen
- **Figur 1**: eine Seitenansicht eines Ausführungsbeispiels der erfindungsgemäßen Vorrichtung, wodurch das erfindungsgemäße Verfahren veranschaulicht wird.
- **Figur 2**: eine Draufsicht auf eine schematische Darstellung einer erfindungsgemäßen Vorrichtung.
- **Figur 3**: einen Detailausschnitt aus der erfindungsgemäßen Vorrichtung mit einer detaillierteren Darstellung, insbesondere der Transporteinrichtung.
- **Figuren 4 bis 7**: verschiedene Ansichten der Transporteinrichtung.
- **Figuren 8 bis 11**: verschiedene Ansichten der Puffereinrichtung.
- **Figur 12**: eine Explosionsdarstellung der Puffereinrichtung.

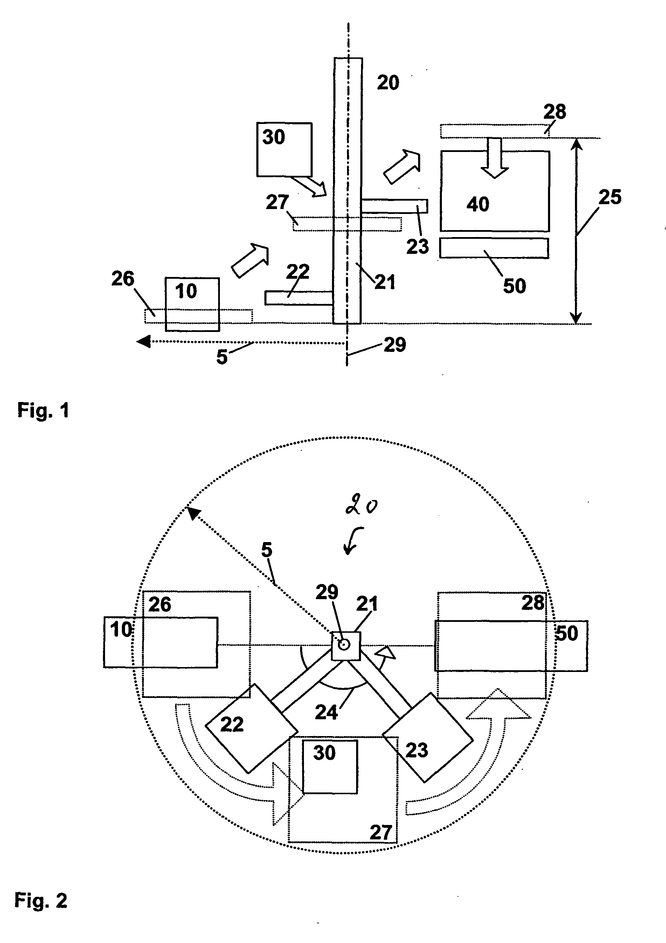

In **Figur 1** ist schematisch eine Seitenansicht einer Prinzipdarstellung der erfindungsgemäßen Vorrichtung dargestellt. An einer mit dem Bezugszeichen 26 bezeichneten ersten Stelle liefert eine (nicht zur erfindungsgemäßen Vorrichtung gehörige) Abgabevorrichtung 10 Objekte (in Figur 1 nicht dargestellt) zur Übernahme durch die erfindungsgemäße Vorrichtung an. Eine als Teil der erfindungsgemäßen Vorrichtung vorgesehene Transporteinrichtung 20 nimmt die Objekte, mittels einer ersten Transportaufnahme 22, auf und transportiert sie zu einer zweiten Stelle 27, wo mittels einer Kontrolleinrichtung 30 eine Kontrolle der Objekte vorgenommen wird. Gleichzeitig mit dem Transport der Objekte von der ersten Stelle 26 zur zweiten Stelle 27 erfolgt (für andere Objekte, insbesondere für eine andere Gruppe von Objekten) ein Transport von der zweiten Stelle 27 zu einer dritten Stelle 28, wobei dieser zweite Transport, insbesondere mittels einer an der Transporteinrichtung 20 vorgesehenen zweiten Transportaufnahme 23 bewerkstelligt wird.

Die Verlagerung von Objekten von der ersten Stelle 26 zur dritten Stelle 28 erfolgt daher in zweiten Halbschritten, wobei die Transporteinrichtung 20 unter Durchfahren einer identischen Bewegung, bevorzugt gleichzeitig, den ersten und den zweiten Halbschritt realisiert und zwar derart, dass die erste Transportaufnahme 22 immer den ersten Halbschritt und die zweite Transportaufnahme 23 immer den zweiten Halbschritt realisiert. Der erste und der zweite Halbschritt ist in der Figur 1 jeweils mit einem von links unten nach rechts oben weisenden Pfeil zwischen der ersten Stelle 26 und der zweiten Stelle 27 bzw. zwischen der zweiten Stelle 27 und der dritten Stelle 28 angegeben. Nach ihrer Ankunft an der dritten Stelle 28 durchlaufen die Objekte erfindungsgemäß eine Puffereinrichtung 40, was durch einen senkrecht nach unten weisen Pfeil dargestellt ist. Von der Puffereinrichtung 40 werden die Objekte zur Übergabe an eine (nicht zur erfindungsgemäßen Vorrichtung gehörige) Annahmevorrichtung 50 weitergegeben. Erfindungsgemäß ist es insbesondere so, dass zwischen der ersten Stelle 26 und der dritten Stelle 28 eine Wegstrecke 25 entlang der Drehachse 29 zurückgelegt wird, wobei gleichzeitig um eine Drehachse 29 eine Drehung der Objekte erfolgt. Hierzu weist die Transporteinrichtung 20 einen Arm 21 auf, der sich insbesondere entlang der Drehachse 29 erstreckt und an dem, radial beabstandet, die erste und zweite Transportaufnahme 22, 23 angeordnet sind. In Figur 1 ist weiterhin ein Radius 5 um die Drehachse 29 mittels eines gestrichelten Pfeils bereits eingezeichnet, der den Bewegungsradius des erfindungsgemäßen Verfahrens bzw. der erfindungsgemäßen Vorrichtung angibt. Erfindungsgemäß ist das Verfahren dahingehend ausgelegt, dass es besonders raumsparend durchgeführt werden kann bzw. ist die Vorrichtung derart eingerichtet, dass sie einen besonders geringen Raumbedarf hat.

In **Figur 2** ist eine Draufsicht auf eine schematische Darstellung der erfindungsgemäßen Vorrichtung zur Veranschaulichung des erfindungsgemäßen Verfahrens dargestellt. Wiederum ist der Radius 5 um die Drehachse 29 dargestellt. An der Pfeilspitze des Radius 5 ist weiterhin ein punktierter Kreis dargestellt, der den Aktionsradius der Vorrichtung bzw. den zur Durchführung des erfindungsgemäßen Verfahrens maximal benötigten Platzbedarf angibt. Wiederum ist die erste Stelle 26, die zweite Stelle 27 und die dritte Stelle 28 in punktierter Linie angedeutet, wobei die (nicht zur erfindungsgemäßen Vorrichtung gehörige) Abgabevorrichtung 10 die in **Figur 2** ebenfalls nicht dargestellten Objekte zur ersten Stelle 26 zur Übernahme durch die Transporteinrichtung 20 bewegt. Die Abgabevorrichtung 10 dient daher als Übergabeschnittstelle zwischen der erfindungsgemäßen Vorrichtung und einer im Produktionsfluss davor angeordneten beliebigen Arbeitsstation. Weiterhin ist die dritte Stelle 28 und die (nicht zur erfindungsgemäßen Vorrichtung gehörige) Annahmevorrichtung 50 zur Annahme der Objekte (in Figur 2 nicht dargestellt) von der erfindungsgemäßen Vorrichtung in **Figur 2** angedeutet. Die Transporteinrichtung 20 weist wiederum den Arm 21 entlang der Drehachse 29 auf, an dem die erste Transportaufnahme 22 und die zweite Transportaufnahme 23 radial von der Drehachse 29 beabstandet angeordnet sind. Wie aus der **Figur 1** ersichtlich, sind die Transportaufnahmen 22, 23 entlang des Arms 21 axial um etwa die Hälfte der zwischen der ersten Stelle 26 und der dritten Stelle 28 zurückzulegenden Wegstrecke 25 entlang der Drehachse 29 beabstandet. Hinsichtlich der Drehung der Transportvorrichtung 20 um die Drehachse 29 bewegt sich die erste Transportaufnahme 22 im Beispiel der **Figur 2** lediglich im Winkelbereich zwischen der ersten Stellte 26 und der zweiten Stelle 27, währenddem sich die zweite Transportaufnahme 23 im Beispiel der **Figur 2** lediglich zwischen der zweiten Stelle 27 und der dritten Stelle 28 bewegt. Insgesamt ergibt sich für die Bewegung der Objekte von der ersten Stelle 26 zu der dritten Stelle 28 (während zweier nachfolgender Takte der Transporteinrichtung 20), dass die Objekte um einen mit dem Bezugszeichen 24 bezeichneten Gesamtdrehwinkel bzw. Drehwinkel bewegt werden. Die Zwischenlagerung der Objekte an der zweiten Stelle 27 ermöglicht es, erfindungsgemäß eine In-Prozess-Kontrolle durch die Kontrolleinrichtung 30, insbesondere an der zweiten Stelle 27, durchzuführen. Die In-Prozess-Kontrolle durch die Kontrolleinrichtung 30 ist in **Figur 1** durch einen schräg von links oben nach rechts unten weisenden Pfeil an der Kontrolleinrichtung 30 angedeutet. Die Bewegung zwischen der ersten Stelle 26 und der zweiten Stelle 27 (erste Teilbewegung der Objekte bzw. erster Halbschritt) ist in **Figur 2** mittels eines punktiert gezeichneten 90°-Pfeils zwischen der ersten Stelle 26 und der zweiten Stelle 27 dargestellt und die zweite Teilbewegung der Objekte zwischen der zweiten Stelle 27 und der dritten Stelle 28 ist in **Figur 2** mittels eines punktiert gezeichneten weiteren 90°-Pfeils dargestellt. Im Bereich der dritten Stelle 28 erfolgt erfindungsgemäß die Übergabe der Objekte an die Annahmevorrichtung 50, wobei die Objekte, insbesondere ausgehend von der dritten Stelle 28, durch die Puffereinrichtung 40 hindurch bewegt werden, insbesondere mittels der auf die Objekte wirkenden Schwerkraft, d.h. im wesentlichen von oben nach unten.

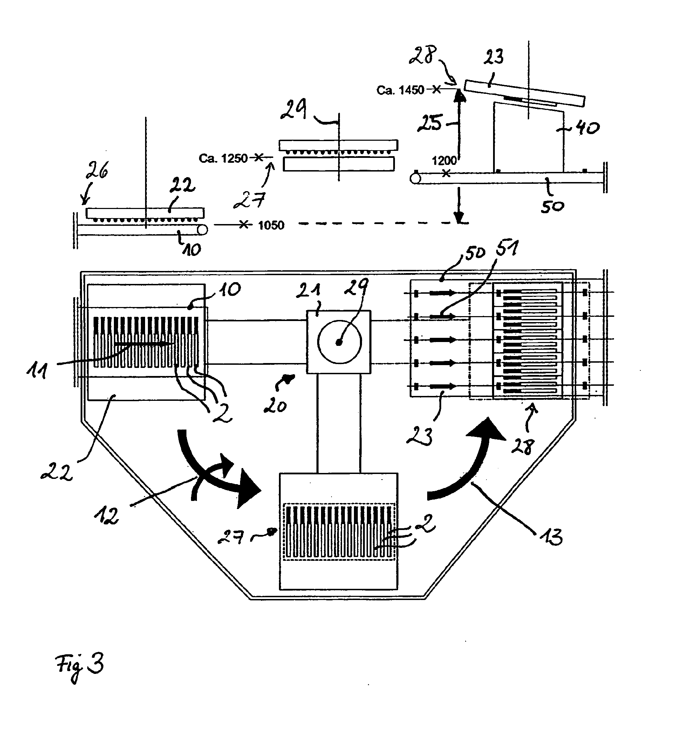

In **Figur 3** ist eine detailliertere Darstellung der erfindungsgemäßen Vorrichtung zur Veranschaulichung des erfindungsgemäßen Verfahrens abgebildet. Von der Abgabevorrichtung 10, welche beispielsweise als ein (Endlos)transportband ausgebildet ist, werden Objekte 2 and die in **Figur 3** nicht als solche bezeichnete erste Stelle 26 herantransportiert. Dort wird eine einer ersten Anzahl m₁ entsprechende Gruppe von Objekten 2 von der Transporteinrichtung 20, insbesondere mittels der ersten Transportaufnahme 22 aufgenommen und zu der zweiten Stelle 27 transportiert, wobei die Vorrichtung 20 eine Drehbewegung um die Drehachse 29 ausführt. Gleichzeitig mit dieser Drehbewegung erfolgt erfindungsgemäß eine (Longitudinal-)Bewegung der ersten Transportaufnahme 22 und damit auch der mittels dieser transportierten Objekte 2 entlang der Drehachse 29. Die Transporteinrichtung 20 bzw. insbesondere ihre erste Transportaufnahme 22 legt die Objekte 2 sodann an der zweiten Stelle 27 ab und bewegt sich wieder zurück, derart, dass die erste Transportaufnahme 22 an der ersten Stelle ankommt. Wenn dies der Fall ist, ist die zweiten Transportaufnahme 23 an der zweiten Stelle 27 und bereit, die Objekte 2 aufzunehmen. Mittels der gleichen Bewegung (wie während des gerade beschriebenen ersten Taktes der Vorrichtung), mit der die erste Transportaufnahme 22 die Gruppe von m₁ Objekten von der ersten Stelle zur zweiten Stelle 27 bewegt, bewegt die zweite Transportaufnahme 23 die von ihr an der zweiten Stelle 27 aufgenommenen Objekte 2 zur dritten Stelle 28. An der dritten Stelle 28 ist unterhalb der Zielposition der zweiten Transportaufnahme 23 die Puffereinrichtung 40 angeordnet, so dass die Objekte 2 von der Transporteinrichtung 20 bzw. insbesondere von der zweiten Transportaufnahme 23 der Puffereinrichtung 40 übergeben werden können. Letztlich gibt die Puffereinrichtung 40 während eines Übergabetaktes eine zweite Anzahl m₂ von Objekten an die Aufnahmevorrichtung 50 ab. Aus der **Figur 3** wird deutlich, dass im dargestellten Beispiel die erste Anzahl m₁ einer Gruppe von Objekten 2 von sechzehn Objekten entspricht und dass die zweite Anzahl m₂ einer Gruppe von fünf Objekten zur Abgabe von der Puffereinrichtung 40 an die Annahmevorrichtung 50 entspricht. Selbstverständlich können die erste Anzahl m₁ und die zweite Anzahl m₂ auch anders gewählt werden. Mittels des Pfeils 11 in **Figur 3** ist die Transportrichtung der Abgabevorrichtung 10 angedeutet und mittels des Pfeils 51 ist die Transportrichtung der Annahmevorrichtung 50 in **Figur 3** angedeutet. Beide Pfeile 11, 51 weisen von links nach rechts und verlaufen im wesentlichen parallel. Dies bedeutet, dass die erfindungsgemäße Vorrichtung bzw. das erfindungsgemäße Verfahren eine taktweise Weitergabe der Objekte 2 von der die Objekte mit der Abgabevorrichtung 10 abgebenden Arbeitsstation (nicht dargestellt) zu der die Objekte mittels der Annahmevorrichtung 50 annehmenden Arbeitsstation (nicht dargestellt) ermöglicht, wobei eine Änderung der Orientierung der Objekte vorgenommen wird (die Objekte 2 werden quer zur Transportrichtung 11 liegend angenommen und werden längs zur Abtransportrichtung 51 orientiert ebenfalls liegend abgegeben), was zu einer besonders kostengünstigen und platzeffizienten Einrichtung des erfindungsgemäßen Verfahrens und der erfindungsgemäßen Vorrichtung führt. In **Figur 3** sind die Objekte 2 einzeln dargestellt. Sie weisen eine längliche Form auf und sind insbesondere als pharmazeutische Produkte, beispielsweise Trinkhalme zur Verabreichung von Einzeldosen, vorgesehen. Die Objekte 2 weisen in **Figur 3** dargestellt ein helles und ein dunkles Ende auf, so dass deren Orientierung im Laufe des erfindungsgemäßen Verfahrens deutlich wird. Mittels der mit den Bezugszeichen 12 und 13 bezeichneten Pfeilen wird die Drehung um die Drehachse 29 während des erfindungsgemäßen Verfahrens dargestellt.

Die mit dem Bezugszeichen 12 bezeichneten Pfeile in **Figur 3** deuten an, dass die Objekte 2 zwischen der ersten Stelle und der zweiten Stelle 27 entweder nicht um die Drehachse 29 gedreht werden oder aber zunächst durch die Drehung der ersten Transportaufnahme 22 um die Drehachse 29 um 90° nach links gedreht werden und anschließend an der zweiten Stelle 27, beispielsweise auf einem Drehteller, um etwa 90° nach rechts gedreht werden, so dass die Orientierung der Objekte 2 konstant bleibt. Alternativ zu der zweimaligen Drehung in verschiedene Richtungen ist es erfindungsgemäß auch möglich, dass die Transportaufnahmen 22, 23 an ihren jeweiligen mit dem Arm 21 angeordneten Auslegern drehbar um eine weitere, zur Drehachse 29 parallele Achse vorgesehen sind. Die Pfeile 13 deuten an, dass die Objekte 2 zwischen der zweiten Stelle 27 und der dritten Stelle 28 um etwa 90° nach links gedreht werden, so dass insgesamt von der ersten Stelle 26 zur dritten Stelle 28 eine Drehung der Objekte 2 um die Drehachse 29 um etwa 90° nach links durchgeführt wird.

Aus dem oberen Teil der **Figur 3** wird weiterhin deutlich, dass zwischen der ersten Stelle 26 und der dritten Stelle 28 eine Wegstrecke 25 zurückgelegt wird, wobei die zweite Stelle 27 entlang der Drehachse 29 etwa auf halbem Weg der Wegstrecke 25 angeordnet ist, vergleiche die im oberen Bereich der **Figur 3** angedeutete Seitenansicht des Detailausschnittes der erfindungsgemäßen Vorrichtung.

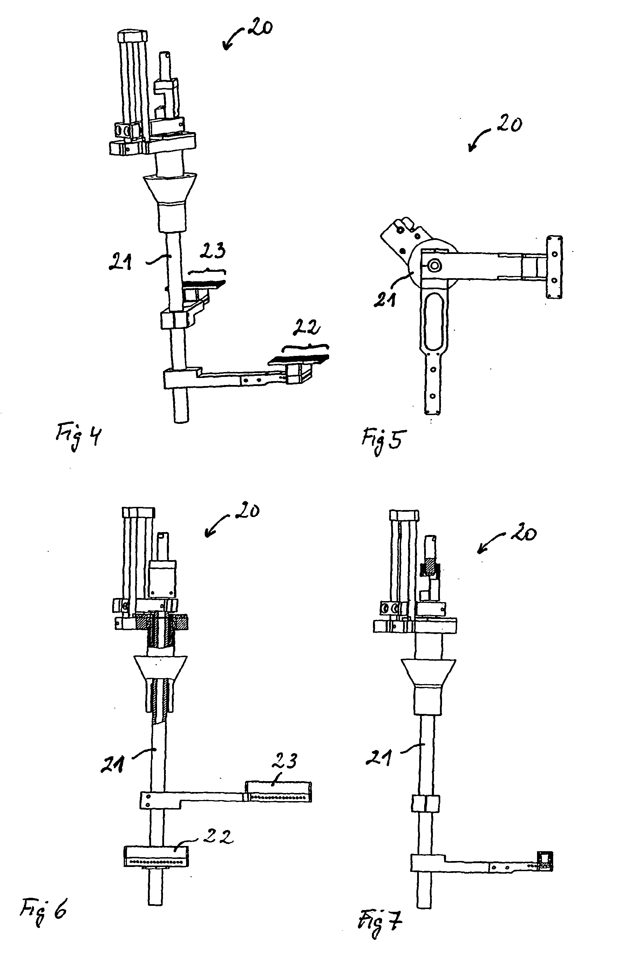

In den **Figuren** 4 **bis 7** sind verschiedenen Ansichten der Transporteinrichtung 20 mit dem Arm 21 und der ersten und zweiten Transportaufnahme 22, 23 dargestellt.

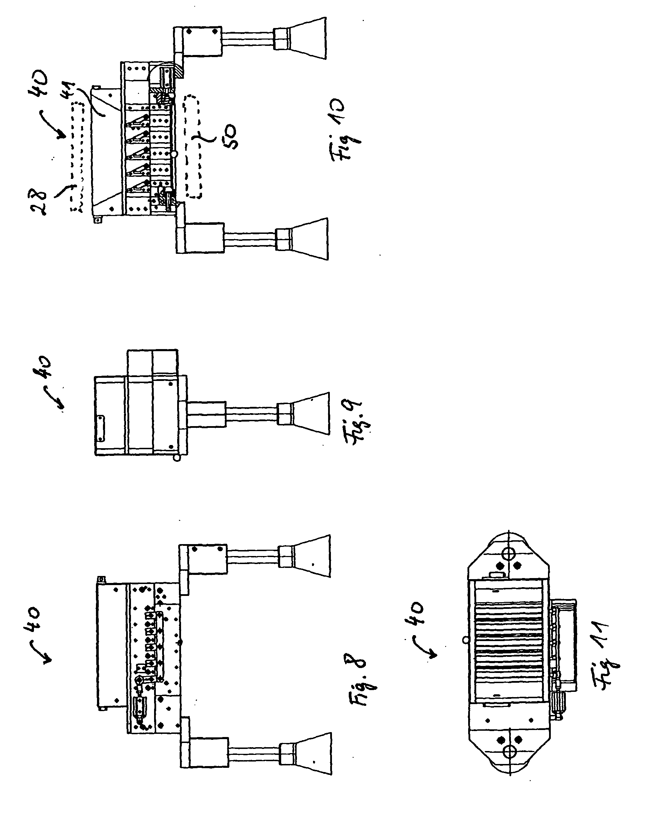

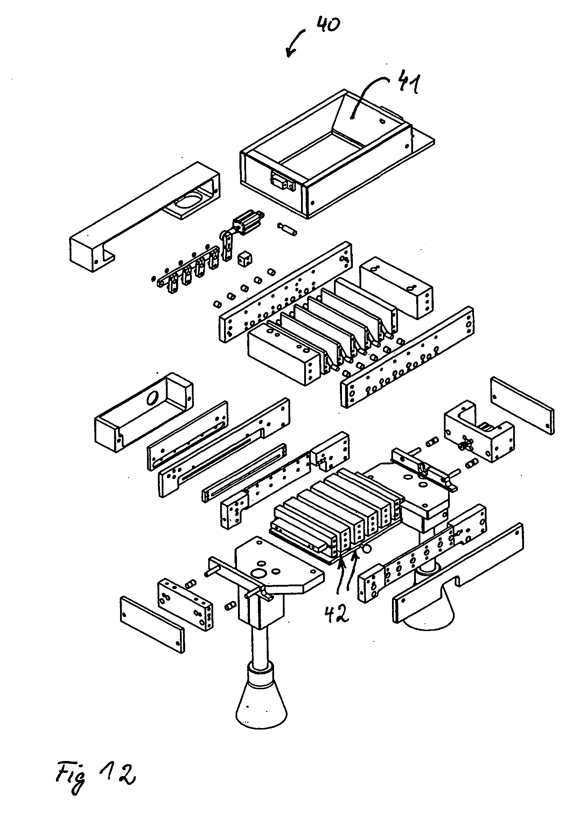

In den **Figuren 8 bis 12** sind verschiedene Ansichten der Speichereinrichtung 40 mit dem Trichter 41 bzw. eine Explosionsdarstellung der Speichereinrichtung 40 dargestellt. Hierzu ist in **Figur 10** in punktierter Linie angedeutet die räumliche Zuordnung zur dritten Stelle 28. Die in der **Figur 10** nicht dargestellten Objekte 2 fallen von der dritten Stelle 28 in den Trichter 41 der Speichereinrichtung 40 und werden dann in Gruppen von Objekten an die ebenfalls mit gestrichelter Linie angedeutete Annahmevorrichtung 50 abgegeben, wobei die Anzahl der Objekte 2 in einer solchen Abgabegruppe der zweiten Anzahl m₂ entspricht. Erfindungsgemäß ist besonders vorteilhaft, dass die Speichereinrichtung 40 verschließbare und zu öffnende Schiebeöffnungen aufweist, die eine Anzahl von Objekten 2 gleichzeitig abzugeben im Stande ist, die der zweiten Anzahl m₂ entspricht. Die Schiebeöffnungen gehen aus der Explosionsdarstellung der **Figur 12****,** an der mit dem Bezugszeichen 42 bezeichneten Stelle, hervor.

### Bezugszeichnliste

- 2: Objekte
- 5: Radius
- 10: Abgabevorrichtung
- 11: Transportrichtung der Abgabevorrichtung
- 12: Drehung zwischen der ersten und der zweiten Stelle
- 13: Drehung zwischen der zweiten und der dritten Stelle
- 20: Transporteinrichtung
- 21: Arm
- 22: erste Transportaufnahme
- 23: zweite Transportaufnahme
- 24: Drehwinkel
- 25: Wegstrecke
- 26: erste Stelle
- 27: zweite Stelle
- 28: dritte Stelle
- 29: Drehachse
- 30: Kontrolleinrichtung
- 40: Puffereinrichtung
- 41: Trichter
- 42: Öffnungen
- 50: Annahmevorrichtung
- 51: Transportrichtung der Annahmevorrichtung
- m₁: erste Anzahl
- m₂: zweite Anzahl

## Patentansprüche

1. Verfahren zur Übernahme einer ersten Anzahl m₁ von Objekten (2), insbesondere pharmazeutischen Produkten, von einer Abgabevorrichtung (10) und zur Übergabe einer zweiten Anzahl m₂ von Objekten (2) an eine Annahmevorrichtung (50), wobei zeitlich zwischen der Übernahme der ersten Anzahl m₁ von Objekten (2) und der Übergabe der zweiten Anzahl m₂ von Objekten (2) eine In-Prozess-Kontrolle durchgeführt wird, wobei zeitlich vor der Übergabe der zweiten Anzahl m₂ von Objekten (2) die Objekte (2) im maximalen Umfang des ein- bis zehnfachen der zweiten Anzahl m₂, bevorzugt im maximalen Umfang des drei- bis fünffachen der zweiten Anzahl m₂, gepuffert bzw. gespeichert werden und wobei die Übernahme, die in-Prozess-Kontrolle, die Pufferung bzw. Speicherung und die Übergabe von Objekten (2) innerhalb eines vorgegebenen Radius (5) um eine Drehachse (29) einer Transporteinrichtung (20) durchgeführt wird, der das ein- bis fünfzehnfache der größten Ausdehnung der Objekte (2), bevorzugt das vier- bis sechsfache der größten Ausdehnung der Objekte (2), nicht überschreitet, wobei die Übernahme der ersten Anzahl m₁ von Objekten (2) in einem ersten Halbschritt und die Übergabe der zweiten Anzahl m₂ von Objekten (2) in einem zweiten Halbschritten durchgeführt wird, wobei von einer ersten Transportaufnahme (22) der Transporteinrichtung (20) immer der erste Halbschritt und von einer zweiten Transportaufnahme (23) der Transporteinrichtung (20) immer der zweite Halbschritt durchgeführt werden, wobei die erste und die zweite Transportaufnahme (22, 23) um die Drehachse (29) der Transporteinrichtung (20) gedreht werden, und wobei die Transporteinrichtung (20) unter Durchfahren einer identischen Bewegung den ersten und den zweiten Halbschritt realisiert.

2. Verfahren nach Anspruch 1, **dadurch gekennzeichnet, dass** die Objekte (2) entlang der Drehachse (29) um eine Wegstrecke (25) verlagert werden, dass die Objekte (2) um die Drehachse (29) um einen Drehwinkel (24) gedreht werden und dass die erste Anzahl m₁ ungleich der zweiten Anzahl m₂ ist.

3. Verfahren nach einem der vorhergehenden Ansprüche, **dadurch gekennzeichnet, dass** die erste Anzahl m₁ von Objekten (2) im Wesentlichen gleichzeitig übernommen werden und dass die zweite Anzahl m₂ von Objekten (2) im Wesentlichen gleichzeitig übergeben werden.

4. Verfahren nach einem der vorhergehenden Ansprüche, **dadurch gekennzeichnet, dass** die erste Anzahl m₁ von Objekten (2) während eines Übemahmetaktes übergeben werden und dass die zweite Anzahl m₂ von Objekten (2) während eines Übergabetaktes übergeben werden, wobei sich der Übemahmetakt und der Übergabetakt zumindest teilweise zeitlich überlappen.

5. Verfahren nach einem der vorhergehenden Ansprüche, **dadurch gekennzeichnet, dass** die Objekte (2) zeitlich nach der In-Prozess-Kontrolle gepuffert bzw. gespeichert werden.

6. Verfahren nach einem der vorhergehenden Ansprüche, **dadurch gekennzeichnet, dass** die In-Prozess-Kontrolle für jeweils eine Gruppe von Objekten (2), die der ersten Anzahl m₁ von Objekten (2) entspricht, gleichzeitig durchgeführt wird.

7. Verfahren nach einem der vorhergehenden Ansprüche, **dadurch gekennzeichnet, dass** die erste Anzahl m₁ von Objekten (2) fünf bis fünfzig, insbesondere sechzehn, ist und dass die zweite Anzahl m₂ von Objekten (2) eins bis fünfzehn, insbesondere fünf, ist, wobei die erste Anzahl m₁ von Objekten (2) bevorzugt größer als die zweite Anzahl m₂ ist.

8. Vorrichtung zur Durchführung eines Verfahrens nach einem der Ansprüche 1 bis 7,
wobei die Übernahme der ersten Anzahl m₁ von Objekten (2) von der Abgabevorrichtung (10) in einem ersten Halbschritt und die Übergabe der zweiten Anzahl m2 von Objekten (2) an die Annahmevorrichtung (50) in einem zweiten Halbschritten durchgeführt wird, mit:
- einer Kontrolleinrichtung (30) zum Durchführen einer In-Prozess-Kontrolle der Objekte;
- einer Puffereinrichtung (40) zur Pufferung der Objekte im maximalen Umfang des ein- bis zehnfachen der zweiten Anzahl m2, bevorzugt im maximalen Umfang des drei- bis fünffachen der zweiten Anzahl m2; und
- einer Transporteinrichtung (20), welche einen eine Drehachse (29) bestimmenden Arm (21) sowie eine von der Drehachse (29) radial beabstandete erste Transportaufnahme (22) und eine von der Drehachse (29) radial beabstandete zweite Transportaufnahme (23) aufweist, so dass die erste und die zweite Transportaufnahme (22, 23) um die Drehachse (29) gedreht werden, wobei von der ersten Transportaufnahme (22) immer der erste Halbschritt und von der zweiten Transportaufnahme (23) immer der zweite Halbschritt durchgeführt werden;
wobei die Vorrichtung so ausgebildet ist, dass die Übernahme, die In-Prozess-Kontrolle, die Pufferung und die Übergabe von Objekten (2) innerhalb eines vorgegebenen Radius (5) um eine Drehachse (29) durchgeführt wird, der das ein- bis fünfzehnfache der größten Ausdehnung der Objekte (2), bevorzugt das vier- bis sechsfache der größten Ausdehnung der Objekte (2), nicht überschreitet.

9. Vorrichtung nach Anspruch 8, **dadurch gekennzeichnet, dass** die Transportaufnahmen (22, 23) entlang des Arms (21) axial um etwa die Hälfte der Wegstrecke (25) beabstandet sind.

10. Vorrichtung nach einem der Ansprüche 8 oder 9, **dadurch gekennzeichnet, dass** die Drehachse (29) im Wesentlichen vertikal verläuft.

11. Vorrichtung nach einem der Ansprüche 8 bis 10, **dadurch gekennzeichnet, dass** die Puffereinrichtung (40) einen Trichter (41) als Puffer aufweist.

## Claims

1. A method for the acceptance of a first number m₁ of objects (2), in particular pharmaceutical products, from a supplying device (10) and for the transferral of a second number m₂ of objects (2) to a receiving device (50), in-process monitoring being carried out in the interval between the acceptance of the first number m₁ of objects (2) and the transferral of the second number m₂ of objects (2), and prior to the transferral of the second number m₂ of objects (2) the objects (2) are buffered or stored in a maximum amount equal to from one to ten times the second number m₂ and preferably in a maximum amount equal to from three to five times the second number m₂, and the acceptance, in-process monitoring, buffering or storage, and transferral of objects (2) being carried out within a specified radius (5) about a pivot axis (29) of a transporting device (20), which radius does not exceed from one to fifteen times the greatest extent of the objects (2) and preferably does not exceed from four to six times the greatest extent of the objects (2), acceptance of the first number m₁ of objects (2) being carried out in a first half step and transferral of the second number m₂ of objects (2) being carried out in a second half step, a first transporting receptacle (22) of the transporting device (20) always carrying out the first half step and a second transporting receptacle (23) of the transporting device (20) always carrying out the second half step, the first and the second transporting receptacles (22, 23) being rotated about the pivot axis (29) of the transporting device (20) and the transporting device (20) performing the first and the second half steps while effecting an identical movement.

2. A method according to claim 1, **characterised in that** the objects (2) are translocated along the pivot axis (29) by a distance (25), that the objects (2) are pivoted about the pivot axis (29) by an angle of rotation (24), and that the first number m₁ differs from the second number m₂.

3. A method according to either one of the previous claims, **characterised in that** the first number m₁ of objects (2) are accepted substantially simultaneously and that the second number m₂ of objects (2) are transferred substantially simultaneously.

4. A method according to any one of the previous claims, **characterised in that** the first number m₁ of objects (2) are transferred during an acceptance cycle and that the second number m₂ of objects (2) are transferred during a transferral cycle, the acceptance cycle and the transferral cycle overlapping temporally at least in part.

5. A method according to any one of the previous claims, **characterised in that** the objects (2) are buffered or stored following the in-process monitoring.

6. A method according to any one of the previous claims, **characterised in that** the in-process monitoring is carried out simultaneously in each case on a group of objects (2) which corresponds to the first number m₁ of objects (2).

7. A method according to any one of the previous claims, **characterised in that** the first number m₁ of objects (2) ranges from five to fifty and is in particular sixteen, and that the second number m₂ of objects (2) ranges from one to fifteen and is in particular five, the first number m₁ of objects (2) preferably being larger than the second number m₂.

8. A device for carrying out a method according to any one of claims 1 to 7, acceptance of the first number m₁ of objects (2) being carried out by the supplying device (10) in a first half step and transferral of the second number m₂ of objects (2) to the receiving device (50) being carried out in a second half step, comprising:
- a monitoring device (30) for carrying out in-process monitoring of the objects;
- a buffering device (40) for buffering the objects in a maximum amount equal to from one to ten times the second number m₂ and preferably in a maximum amount equal to from three to five times the second number m₂; and
- a transporting device (20) which has an arm (21) defining a pivot axis (29) and also a first transporting receptacle (22) radially spaced from the pivot axis (29) and a second transporting receptacle (23) radially spaced from the pivot axis (29), such that the first and the second transporting receptacles (22, 23) are rotated about the pivot axis (29), the first half step always being carried out by the first transporting receptacle (22) and the second half step always being carried out by the second transporting receptacle (23); the device being constructed such that acceptance, in-process monitoring, buffering and transferral of objects (2) are carried out within a specified radius (5) about a pivot axis (29), which radius does not exceed from one to fifteen times the greatest extent of the objects (2) and preferably does not exceed from four to six times the greatest extent of the objects (2).

9. A device according to claim 8, **characterised in that** the transporting receptacles (22, 23) are axially spaced from each other along the arm (21) by approximately half the distance (25).

10. A device according to either one of claims 8 or 9, **characterised in that** the pivot axis (29) extends substantially vertically.

11. A device according to any one of claims 8 to 10, **characterised in that** the buffering device (40) comprises a hopper (41) as buffer.

## Revendications

1. Procédé pour prendre un premier nombre m₁ d'objets (2), en particulier des produits pharmaceutiques, depuis un dispositif de distribution (10) et pour transférer un deuxième nombre m₂ d'objets (2) à un dispositif de réception (50), un contrôle en cours de processus étant effectué temporellement entre la prise du premier nombre m₁ d'objets (2) et le transfert du deuxième nombre m₂ d'objets (2), les objets (2), temporellement avant le transfert du deuxième nombre m₂ d'objets (2), étant tamponnés ou stockés dans la capacité maximale de un à dix fois le deuxième nombre m₂, de préférence dans la capacité maximale de trois à cinq fois le deuxième nombre m₂, et la prise, le contrôle en cours de processus, le tamponnage ou le stockage et le transfert des objets (2) étant effectués à l'intérieur d'un rayon prédéterminé (5) autour d'un axe de rotation (29) d'un dispositif de transport (20), qui ne dépasse pas une à quinze fois l'étendue maximale des objets (2), de préférence quatre à six fois l'étendue maximale des objets (2), la prise du premier nombre m₁ d'objets (2) étant effectuée dans une première demi-étape et le transfert du deuxième nombre m₂ d'objets (2) étant effectué dans une deuxième demi-étape, la première demi-étape étant toujours effectuée depuis un premier logement de transport (22) du dispositif de transport (20) et la deuxième demi-étape étant toujours effectuée depuis un deuxième logement de transport (23) du dispositif de transport (20), les premier et deuxième logements de transport (22, 23) étant tournés autour de l'axe de rotation (29) du dispositif de transport (20), et le dispositif de transport (20) réalisant la première et la deuxième demi-étape en effectuant un mouvement de déplacement identique.

2. Procédé selon la revendication 1, **caractérisé en ce que** les objets (2) sont décalés le long de l'axe de rotation (29) d'une distance (25), **en ce que** les objets (2) sont tournés autour de l'axe de rotation (29) d'un angle de rotation (24) et **en ce que** le premier nombre m₁ est différent du deuxième nombre m₂.

3. Procédé selon l'une quelconque des revendications précédentes, **caractérisé en ce que** le premier nombre m₁ d'objets (2) est pris essentiellement simultanément et **en ce que** le deuxième nombre m₂ d'objets (2) est transféré essentiellement simultanément.

4. Procédé selon l'une quelconque des revendications précédentes, **caractérisé en ce que** le premier nombre m₁ d'objets (2) est transféré pendant un temps de prise et **en ce que** le deuxième nombre m₂ d'objets (2) est transféré pendant un temps de transfert, le temps de prise et le temps de transfert se chevauchant au moins en partie temporellement.

5. Procédé selon l'une quelconque des revendications précédentes, **caractérisé en ce que** les objets (2) sont tamponnés ou stockés temporellement après le contrôle en cours de processus.

6. Procédé selon l'une quelconque des revendications précédentes, **caractérisé en ce que** le contrôle en cours de processus est effectué simultanément à chaque fois pour un groupe d'objets (2) qui correspond au premier nombre m₂ d'objets (2).

7. Procédé selon l'une quelconque des revendications précédentes, **caractérisé en ce que** le premier nombre m₁ d'objets (2) est de cinq à cinquante, en particulier de seize, et **en ce que** le deuxième nombre m₂ d'objets (2) est de un à quinze, en particulier de cinq, le premier nombre m₁ d'objets (2) étant de préférence supérieur au deuxième nombre m₂.

8. Dispositif pour mettre en oeuvre un procédé selon l'une quelconque des revendications 1 à 7, dans lequel la prise du premier nombre m₁ d'objets (2) est effectuée depuis le dispositif de distribution (10) dans une première demi-étape et le transfert du deuxième nombre m₂ d'objets (3) est effectué au niveau du dispositif de réception (50) dans une deuxième demi-étape, avec :
- un dispositif de contrôle (30) pour effectuer un contrôle en cours de processus des objets ;
- un dispositif de tamponnage (40) pour le tamponnage des objets dans la capacité maximale de un à dix fois le deuxième nombre m₂, de préférence dans la capacité maximale de trois à cinq fois le deuxième nombre m₂, et
- un dispositif de transport (20), qui présente un bras (21) définissant un axe de rotation (29) ainsi qu'un premier logement de transport (22) espacé radialement de l'axe de rotation (29) et un deuxième logement de transport (23) espacé radialement de l'axe de rotation (29), de sorte que le premier et le deuxième logement de transport (22, 23) soient tournés autour de l'axe de rotation (29), la première demi-étape étant toujours effectuée depuis le premier logement de transport (22) et la deuxième demi-étape étant toujours effectuée depuis le deuxième logement de transport (23) ; le dispositif étant réalisé de telle sorte que la prise, le contrôle en cours de processus, le tamponnage et le transfert d'objets (2) soit effectués à l'intérieur d'un rayon prédéterminé (5) autour d'un axe de rotation (29), qui ne dépasse pas une à quinze fois l'étendue maximale des objets (2), de préférence quatre à six fois l'étendue maximale des objets (2).

9. Dispositif selon la revendication 8, **caractérisé en ce que** les logements de transport (22, 23) sont espacés axialement d'environ la moitié de la distance (25) le long du bras (21).

10. Dispositif selon l'une quelconque des revendications 8 ou 9, **caractérisé en ce que** l'axe de rotation (29) s'étend essentiellement verticalement.

11. Dispositif selon l'une quelconque des revendications 8 à 10, **caractérisé en ce que** le dispositif de tamponnage (40) présente en tant que tampon une trémie (41).
